(19) Europäisches Patentamt
European Patent Office
Office européen des brevets

(11) **EP 2 651 674 B1**

(12) **FASCICULE DE BREVET EUROPEEN**

(45) Date de publication et mention
de la délivrance du brevet:
**03.09.2014 Bulletin 2014/36**

(21) Numéro de dépôt: **11787646.6**

(22) Date de dépôt: **14.11.2011**

(51) Int Cl.:
***B60H 1/32*** *(2006.01)*

(86) Numéro de dépôt international:
**PCT/EP2011/070065**

(87) Numéro de publication internationale:
**WO 2012/079884 (21.06.2012 Gazette 2012/25)**

(54) **SYSTÈME ET PROCÉDÉ DE COMMANDE D'UN SYSTÈME D'AIR CLIMATISÉ POUR VÉHICULE AUTOMOBILE**

SYSTEM UND VERFAHREN ZUR STEUERUNG EINES KLIMAANLAGENSYSTEMS FÜR EIN KRAFTFAHRZEUG

SYSTEM AND METHOD FOR CONTROLLING AN AIR CONDITIONING SYSTEM FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1060716**

(43) Date de publication de la demande:
**23.10.2013 Bulletin 2013/43**

(73) Titulaire: **Renault S.A.S.**
**92100 Boulogne-Billancourt (FR)**

(72) Inventeurs:
• **BRAUNSCHWEIG, Vincent**
**F-92260 Fontenay aux Roses (FR)**
• **DENIAUD, Nicolas**
**F-78640 Saint Germain de la Grange (FR)**
• **LE-LAY, Vincent**
**F-78114 Magny les Hameaux (FR)**

(56) Documents cités:
**WO-A1-2005/100883      US-A1- 2003 079 484**
**US-A1- 2008 093 132**

**Description**

Le domaine de l'invention concerne les systèmes d'air climatisé, et plus particulièrement les systèmes d'air climatisé pour véhicules automobiles utilisant un compresseur animé par un moteur électrique.

Les systèmes d'air climatisé comprennent généralement un compresseur, un condenseur, un détendeur, et un évaporateur reliés entre eux par un circuit de réfrigération parcouru par un fluide frigorigène.

Un système d'air climatisé comprend généralement une branche chaude comprenant l'évaporateur et une branche froide comprenant le condenseur, reliées entre elles par le compresseur et le détendeur.

Le compresseur permet d'augmenter la pression du fluide frigorigène sous forme gazeuse et de le faire circuler vers le condenseur. Le condenseur permet d'échanger la chaleur contenue dans le fluide frigorigène avec l'extérieur. Le fluide continue alors vers le détendeur qui régule le débit en entrée de l'évaporateur. Le fluide traverse ensuite l'évaporateur qui permet d'échanger la chaleur de l'extérieur avec le fluide. Le fluide est alors vaporisé et continue son trajet jusqu'au compresseur. Ainsi, la température extérieure est abaissée au voisinage de l'évaporateur et élevée au voisinage du condenseur.

Le document US2008088241 divulgue un système dans lequel la vitesse de rotation du moteur électrique est contrôlée en fonction du besoin de la température d'air soufflé et la température en sortie de l'évaporateur. Le compresseur est piloté selon un mode marche/arrêt avec une vitesse minimum. Ce document ne décrit pas d'optimisation sur les grandes vitesses du compresseur.

Le document FR2840261 divulgue un système et un procédé de régulation d'une installation de climatisation comprenant des moyens permettant de limiter la vitesse du compresseur pour éviter une consommation électrique importante menant à un gain en température faible. Le système divulgue dans ce document repose sur la mesure du taux de compression et/ou sur le rapport entre la diminution de température de l'air soufflé et l'augmentation de la vitesse de rotation du compresseur. Un autre mode de réalisation a recours à des valeurs dynamiques qui sont susceptibles de poser des problèmes de filtrage des mesures et de seuil de détection.

Le document US 2008/093132 A1, qui est considéré comme l'art antérieur le plus proche, divulgue un système de commande d'un système d'air climatisé équipant un véhicule automobile comprenant un évaporateur et un compresseur entraîné par un moteur électrique à vitesse de rotation commandée, le système de commande comprenant un moyen d'élaboration d'une vitesse de rotation limite du compresseur en fonction d'un paramètre d'environnement pouvant être la température extérieure et d'un paramètre dépendant de l'état du véhicule, et un moyen d'élaboration d'une consigne de vitesse de rotation du compresseur en fonction de la vitesse de rotation limite du compresseur, et des moyens de commande de la vitesse de rotation du moteur électrique en fonction de la consigne de vitesse de rotation du compresseur. Il est néanmoins souhaitable de minimiser la consommation électrique du compresseur.

Il existe un besoin pour un dispositif d'estimation de l'intérêt de la consommation électrique au vu du gain en confort thermique obtenu.

Il existe un besoin pour un procédé d'estimation de l'intérêt de la consommation électrique au vu du gain en confort thermique obtenu.

Il est donc proposé un système de commande d'un système d'air climatisé équipant un véhicule automobile comprenant un évaporateur et un compresseur entraîné par un moteur électrique à vitesse de rotation commandée. Le système de commande comprend un moyen d'élaboration d'une vitesse de rotation limite du compresseur en fonction de la température extérieure et de la consigne de température de l'évaporateur, un moyen d'élaboration d'une consigne de vitesse de rotation du compresseur en fonction de la vitesse de rotation limite du compresseur, et des moyens de commande de la vitesse de rotation du moteur électrique en fonction de la consigne de vitesse de rotation du compresseur.

Le système de commande peut comprendre un moyen d'élaboration de la vitesse de rotation limite fonction de la température d'évaporateur et un moyen d'élaboration de la vitesse de rotation limite fonction de la pression reliés par leur sortie au moyen d'élaboration d'une consigne de vitesse de rotation du compresseur.

Le moyen d'élaboration d'une vitesse de rotation limite du compresseur peut recevoir en entrée le débit d'air en sortie du système de climatisation. Le moyen d'élaboration d'une vitesse de rotation limite du compresseur peut comprendre une première cartographie de vitesses limites du compresseur en fonction de la température extérieure, de la consigne de température de l'évaporateur et du débit d'air en sortie du système de climatisation.

Le moyen d'élaboration d'une vitesse de rotation limite du compresseur peut comprendre une seconde cartographie du coefficient de performance en fonction de la température extérieure, des moyens d'élaboration de la puissance électrique du compresseur en fonction de la température extérieure, de la consigne de température de l'évaporateur, du coefficient de performance et d'une valeur du débit d'air en sortie du système de climatisation reçue en entrée, et une troisième cartographie de la vitesse de rotation limite du compresseur en fonction de la puissance électrique du compresseur et de la température extérieure.

Le moyen d'élaboration d'une vitesse de rotation limite du compresseur peut comprendre une régulation de type PI en fonction de la différence entre une consigne de puissance du compresseur et une mesure de puissance du compresseur, reçues en entrée.

Le moyen d'élaboration de la vitesse de rotation limite fonction de la température d'évaporateur peut comprendre une régulation de type PI en fonction de la différence entre une consigne de température d'évaporateur et une température mesurée d'évaporateur, reçues en entrée. Par PI, on entend Proportionnel, Intégral.

Le système de commande peut comprendre une quatrième cartographie apte à émettre une valeur maximale de la pression de réfrigérant en fonction de la température extérieure. Le moyen d'élaboration de la vitesse de rotation limite fonction de la pression peut comprendre une régulation de type PI en fonction de la différence entre valeur maximale de la pression de réfrigérant et la pression de réfrigérant mesurée.

Le moyen d'élaboration d'une consigne de vitesse de rotation du compresseur peut recevoir également en entrée la différence des signaux d'entrée du moyen d'élaboration d'une vitesse de rotation limite du compresseur, du moyen d'élaboration de la vitesse de rotation limite fonction de la température d'évaporateur et du moyen d'élaboration de la vitesse de rotation limite fonction de la pression.

L'invention a également pour objet un procédé de commande d'un système d'air climatisé équipant un véhicule automobile comprenant un évaporateur et un compresseur entraîné par un moteur électrique dont la vitesse de rotation est commandée, dans lequel on élabore une consigne de vitesse de rotation du compresseur en fonction de la température extérieure et de la consigne de température de l'évaporateur, et on asservit le moteur électrique en fonction de la consigne de vitesse de rotation du compresseur.

On peut choisir pour consigne de vitesse de rotation du compresseur la valeur minimale parmi une vitesse de rotation limite du compresseur, une vitesse de rotation limite du compresseur fonction de la température de l'évaporateur et une vitesse de rotation limite du compresseur fonction de la pression de réfrigérant.

On peut élaborer la vitesse de rotation limite du compresseur en fonction d'une cartographie de vitesses maximales du compresseur ayant pour entrées la température extérieure, la consigne de température de l'évaporateur et un débit d'air en sortie du système de climatisation.

On peut élaborer la puissance électrique du compresseur en fonction de la température extérieure, de la consigne de température de l'évaporateur, et du débit d'air en sortie du compresseur, et on peut élaborer la vitesse de rotation limite du compresseur en fonction d'une comparaison de la puissance électrique du compresseur et de la température extérieure.

On peut élaborer une vitesse de rotation limite du compresseur par une régulation de type PI en fonction de la différence entre une consigne de puissance du compresseur et une mesure de puissance du compresseur, reçues en entrée, une vitesse de rotation limite du compresseur fonction de la température de l'évaporateur par une régulation de type PI en fonction de la différence entre une consigne de température d'évaporateur et une température mesurée d'évaporateur, reçues en entrée, une valeur maximale de pression de réfrigérant en fonction de la température extérieure, et une vitesse de rotation limite du compresseur fonction de la pression de réfrigérant par une régulation de type PID en fonction de la différence entre une valeur maximale de pression de réfrigérant et une pression de réfrigérant mesurée.

On peut choisir la consigne de vitesse de rotation du compresseur parmi la vitesse de rotation limite du compresseur fonction de la température de l'évaporateur, la vitesse de rotation limite du compresseur fonction de la pression de réfrigérant, et la vitesse de rotation limite du compresseur fonction de la puissance en fonction de la différence entre la consigne de température d'évaporateur et la température mesurée d'évaporateur, de la différence entre la consigne de puissance du compresseur et la puissance mesurée du compresseur, et de la différence entre la valeur maximale de pression de réfrigérant et la pression de réfrigérant mesurée.

Si la différence de pressions est positive et si la différence de puissances est positive, on peut choisir pour consigne de vitesse de rotation du compresseur la vitesse de rotation limite du compresseur fonction de la température de l'évaporateur.

Dans le cas où la différence de pressions est positive et la différence de températures d'évaporateur est proche de zéro, on peut choisir pour consigne de vitesse de rotation du compresseur la vitesse de rotation limite du compresseur fonction de la pression de réfrigérant.

Par contre, si la différence de puissances est négative et si la différence de températures d'évaporateur est proche de zéro, on peut choisir pour consigne de vitesse de rotation du compresseur la vitesse de rotation limite du compresseur fonction de la puissance.

On peut choisir pour consigne de vitesse de rotation du compresseur la valeur minimale parmi la vitesse de rotation limite du compresseur et la vitesse de rotation limite du compresseur fonction de la pression de réfrigérant si la différence de puissances est négative, si la différence de pressions est négative et si la différence de températures d'évaporateur est proche de zéro.

Si la différence de puissances est négative, si la différence de pressions est négative et si la différence de températures d'évaporateur est positive, on peut choisir pour consigne de vitesse de rotation du compresseur la valeur minimale parmi la vitesse de rotation limite du compresseur fonction de la température de l'évaporateur, la vitesse de rotation limite du compresseur et la vitesse de rotation limite du compresseur fonction de la pression de réfrigérant

Dans le cas où la différence de puissances est positive et la différence de températures d'évaporateur est positive, on peut choisir pour consigne de vitesse de rotation du compresseur la valeur minimale parmi la vitesse de rotation limite du compresseur fonction de la température de l'évaporateur et la vitesse de rotation limite du compresseur.

Si la différence de pressions est négative et si la différence de températures d'évaporateur est positive, on peut choisir pour consigne de vitesse de rotation du compresseur la valeur minimale parmi la vitesse de rotation limite du compresseur fonction de la température de l'évaporateur et la vitesse de rotation limite du compresseur fonction de la pression de réfrigérant.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un système de contrôle du compresseur ;
- la figure 2 illustre un moyen d'élaboration 2 de la vitesse de rotation limite du compresseur, selon un mode de réalisation ;
- la figure 3 illustre le moyen d'élaboration 2 de la vitesse de rotation limite du compresseur, selon un autre mode de réalisation ; et
- la figure 4 illustre un système de contrôle du compresseur selon un autre mode de réalisation.

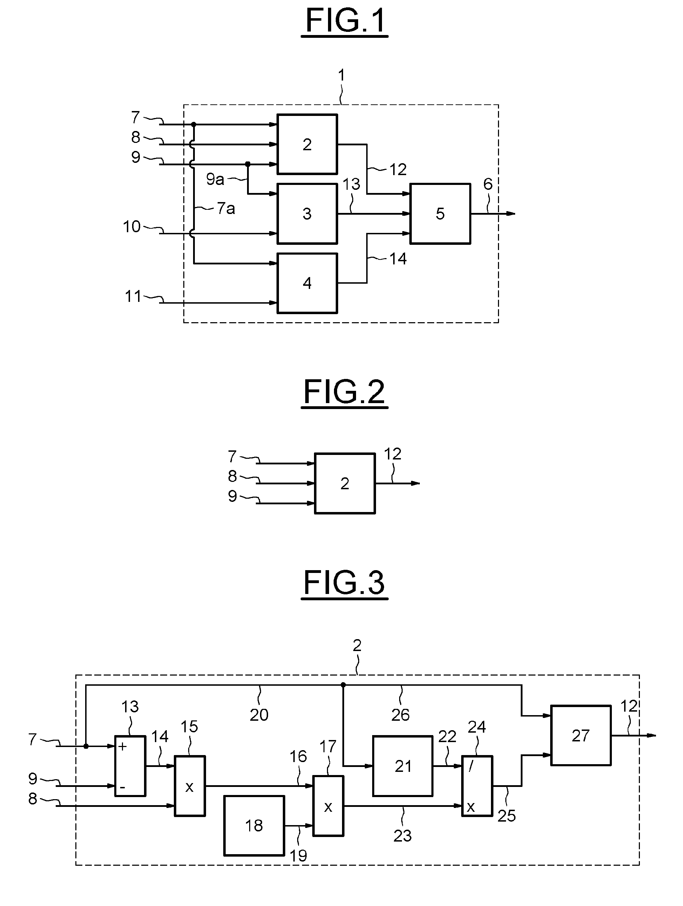

Sur la figure 1, on peut voir un système de contrôle 1 d'un compresseur de système d'air climatisé recevant la température extérieure par l'entrée 7, le débit d'air en sortie du système d'air climatisé par l'entrée 8, la consigne de température d'évaporateur par l'entrée 9, la température mesurée d'évaporateur par l'entrée 10, et la pression de réfrigérant mesurée par l'entrée 11 et émettant par la sortie 6 une consigne de vitesse de rotation du compresseur permettant de limiter la consommation électrique. Le réfrigérant peut être du fréon.

Cette sortie 6 est reliée par l'intermédiaire d'un comparateur 5 à un moyen d'élaboration 2 de la vitesse de rotation limite du compresseur, à un moyen d'élaboration 3 de la vitesse de rotation limite fonction de la température d'évaporateur, et à un moyen d'élaboration 4 de la vitesse de rotation limite fonction de la pression de réfrigérant.

Le moyen d'élaboration 2 de la vitesse de rotation limite du compresseur reçoit en entrée la température extérieure, le débit d'air en sortie du système d'air climatisé et la consigne de température de l'évaporateur.

Le moyen d'élaboration 3 de la vitesse de rotation limite fonction de la température d'évaporateur reçoit en entrée la consigne de température de l'évaporateur et la mesure de température de l'évaporateur.

Le moyen d'élaboration 4 de la vitesse de rotation limite fonction de la pression reçoit en entrée la température extérieure, et la pression de réfrigérant mesurée.

Le comparateur 5 reçoit sur ses entrées les vitesses de rotation limites issues du moyen d'élaboration 2 de la vitesse de rotation limite du compresseur, du moyen d'élaboration 3 de la vitesse de rotation limite fonction de la température d'évaporateur et du moyen d'élaboration 4 de la vitesse de rotation limite fonction de la pression. Le comparateur 5 émet sur sa sortie la consigne de vitesse de rotation du compresseur correspondant à la valeur la plus restrictive parmi les vitesses de rotation limites reçues.

Sur la figure 2, on peut voir un mode de réalisation du moyen d'élaboration 2 de la vitesse de rotation limite du compresseur, qui comprend une cartographie de vitesses de rotation du compresseur en fonction de la température extérieure, du débit d'air en sortie du système d'air climatisé et de la consigne de température de l'évaporateur. Les vitesses de rotation du compresseur qui sont cartographiées présentent la particularité d'être les vitesses maximales permettant d'atteindre un confort acceptable compte tenu des variables d'entrée et sans trop augmenter la consommation électrique du compresseur. Le compromis entre performances thermiques et consommation électrique est ainsi intégré à la cartographie. La limite d'augmentation électrique est définie selon des critères propres à chaque constructeur et plus ou moins drastiques.

Sur la figure 3, on peut voir un autre mode de réalisation du moyen d'élaboration 2 de la vitesse de rotation limite du compresseur, au sein duquel un premier soustracteur 13 émet sur sa sortie la différence entre la température extérieure reçue par l'entrée 7 et la consigne de température de l'évaporateur reçue par l'entrée 9. On peut assimiler la température extérieure à la température en entrée de l'évaporateur.

Le soustracteur 13 effectue le calcul suivant :

$$\Delta T = T_{evapo}^{in} - T_{evapo}^{out} = T_{ext} - T_{vapo\_stp}$$

avec $T_{vapo\ stp}$ = consigne de température de l'évaporateur

Un premier multiplicateur 15 émet sur sa sortie le produit de la sortie 14 du moyen d'élaboration 2 de la vitesse de rotation limite du compresseur et du débit d'air en sortie du système d'air climatisé reçu par l'entrée 8.

Le premier multiplicateur 15 effectue le calcul suivant :

$$P_{evapo}^{temp\acute{e}rature} = C_p \cdot \Delta T \cdot Q_{air} = C_p \cdot \left(T_{ext} - T_{vapo\_stp}\right) \cdot Q_{air}$$

avec $C_p$= la capacité calorifique à pression constante

$Q_{air}$- débit d'air en sortie du système d'air climatisé

Un second multiplicateur 17 émet sur sa sortie le produit de la sortie 16 du premier multiplicateur 15 et d'un facteur d'humidité reçu par la connexion 19 d'un moyen 18 de détermination, d'élaboration ou de mémorisation.

Le second multiplicateur 17 effectue le calcul suivant :

$$P_{evapo} = Facteur\_humidite \cdot P_{evapo}^{temp\acute{e}rature} \quad soit \ en \ rempla\varsigma ant,$$

$$P_{\acute{e}vapo} = Facteur\_humidite \cdot C_p \cdot \left(T_{ext} - T_{vapo\_stp}\right) \cdot Q_{air}$$

avec Facteur_humidite un facteur correctif sur la puissance liée à l'humidité de l'air

Parallèlement, une seconde cartographie 21 reçoit la température extérieure par une dérivation 20 de l'entrée 7. La seconde cartographie 21 émet sur sa sortie une valeur du coefficient de performance fonction de la température extérieure. Le coefficient de performance est assimilable à un rendement minimum acceptable en fonction de la température extérieure. En d'autres termes, le coefficient de performance caractérise le rendement du système de climatisation de façon différente selon la température extérieure. Un rendement à 40°C peut être acceptable alors que le même rendement à 20°C peut ne pas être acceptable. Les critères dictant quels rendements sont acceptables ainsi que la seconde cartographie 21 sont déterminés par essais et sont plus ou moins drastiques selon les exigences du constructeur.

Un diviseur 24 émet sur sa sortie le quotient du résultat du deuxième multiplicateur 17 reçu par la connexion 23 par le résultat de la seconde cartographie 21 reçu par la sortie 22. Le diviseur 24 effectue le calcul suivant :

$$P_{compresseur}^{elec} = \frac{P_{evapo}}{COP}$$

avec COP : le coefficient de performance

On comprend ainsi que le premier soustracteur 13, le premier multiplicateur 15, le deuxième multiplicateur 17, le moyen 18 de détermination, d'élaboration ou de mémorisation et le diviseur 24 forment des moyens d'élaboration de la puissance électrique du compresseur.

Une troisième cartographie 27 reçoit en entrée la valeur issue du diviseur 24 par la connexion 25 et la température extérieure par la déviation 26 de l'entrée 7. La troisième cartographie 27 permet de faire correspondre une valeur de vitesse de rotation limite du compresseur en fonction d'une valeur de pression du compresseur reçue du diviseur 24 et d'une température extérieure. Cette cartographie est déterminée par exemple par essais.

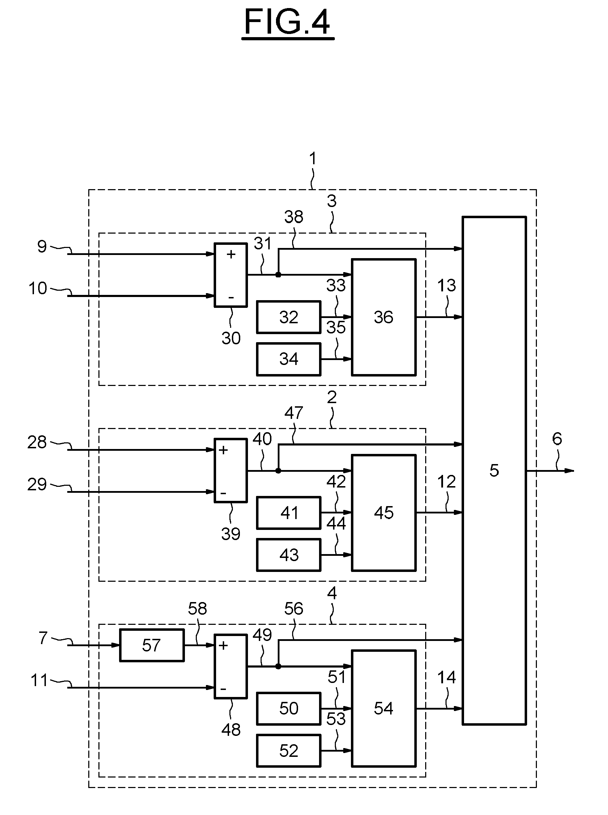

Sur la figure 4, on peut voir un système de contrôle 1 du compresseur selon un autre mode de réalisation. Ce mode de réalisation permet d'intégrer au sein d'un même système, les fonctions liées au pilotage du compresseur, c'est-à-dire la régulation de la température de l'évaporateur, la sécurité liée à la pression de réfrigérant, et la limitation de la puissance électrique consommée.

Un deuxième soustracteur 30 émet en sortie la différence entre la consigne de température d'évaporateur reçue de l'entrée 9 et la température mesurée d'évaporateur reçue de l'entrée 10. Un premier moyen de régulation 36 de type PI (Proportionnel, Intégral) reçoit sur une entrée, un terme différentiel relatif à la température d'évaporation, sur une entrée un coefficient proportionnel relatif à la température d'évaporation et sur une autre entrée un coefficient intégral relatif à la température d'évaporation. Le signal émis en sortie par le deuxième soustracteur 30 est utilisé en tant que terme différentiel relatif à la température d'évaporation. Le coefficient intégral et le coefficient proportionnel sont respectivement reçus des moyens 32 et 33 de détermination, d'élaboration ou de mémorisation. Le moyen de régulation 36 de type PI émet en sortie un signal portant une vitesse de rotation limite du compresseur fonction de la température de l'évaporateur, Le deuxième soustracteur 30 et le moyen de régulation 36 de type PI sont compris dans le moyen d'élaboration 3 de la vitesse de rotation limite fonction de la température d'évaporateur.

Un troisième soustracteur 39 émet en sortie la différence entre la consigne de puissance du compresseur reçue de l'entrée 28 et la mesure de puissance du compresseur reçue de l'entrée 29. Un deuxième moyen de régulation 45 de type PI reçoit sur une entrée, un terme différentiel relatif à la puissance du compresseur, sur une entrée un coefficient proportionnel relatif à la puissance du compresseur et sur une autre entrée un coefficient intégral relatif à la puissance du compresseur. Le signal émis en sortie par le troisième soustracteur 39 est utilisé en tant que terme différentiel relatif à la pression de réfrigérant. Le coefficient intégral et le coefficient proportionnel sont respectivement reçus des moyens 41 et 43 de détermination, d'élaboration ou de mémorisation. Le deuxième moyen de régulation 45 de type PI émet en sortie un signal portant une vitesse de rotation limite du compresseur fonction de la puissance du compresseur, également appelée vitesse de rotation limite du compresseur. Le troisième soustracteur 39 et le deuxième moyen de régulation 45 de type PI sont compris dans le moyen d'élaboration 2 de la vitesse de rotation limite du compresseur.

Une troisième cartographie 57 reçoit en entrée la température extérieure de l'entrée 7 et émet en sortie une valeur maximale de pression du réfrigérant. Un quatrième soustracteur 48 émet en sortie la différence entre la valeur maximale de pression de réfrigérant reçue de la troisième cartographie 57 par la connexion 58 et la pression de réfrigérant mesurée reçue de l'entrée 11. Un troisième moyen de régulation 54 de type PI reçoit sur une entrée, un terme différentiel relatif à la pression de réfrigérant, sur une entrée un coefficient proportionnel relatif à la pression de réfrigérant et sur une autre entrée un coefficient intégral relatif à la pression de réfrigérant. Le signal émis en sortie par le quatrième soustracteur 48 est utilisé en tant que terme différentiel relatif à la pression de réfrigérant. Le coefficient intégral et le coefficient proportionnel sont respectivement reçus des moyens 50 et 52 de détermination, d'élaboration ou de mémorisation.

Le troisième moyen de régulation 54 de type PI émet en sortie un signal portant une vitesse de rotation limite du compresseur fonction de la pression de réfrigérant.

Le quatrième soustracteur 48 et le troisième moyen de régulation 54 de type PI sont compris dans le moyen d'élaboration 4 de la vitesse de rotation limite fonction de la pression.

Le comparateur 5 reçoit en entrée la vitesse de rotation limite du compresseur fonction de la pression de réfrigérant reçue du moyen d'élaboration 4 de la vitesse de rotation limite fonction de la pression par la connexion 14, la vitesse de rotation limite du compresseur reçue du moyen d'élaboration 2 de la vitesse de rotation limite du compresseur par la connexion 12, la vitesse de rotation limite du compresseur fonction de la température de l'évaporateur reçue du moyen d'élaboration 3 de la vitesse de rotation limite fonction de la température d'évaporateur par la connexion 13. Le comparateur 5 reçoit également du quatrième soustracteur 48 par la dérivation 56, la différence entre la valeur maximale de pression de réfrigérant et la pression de réfrigérant mesurée, du deuxième soustracteur 30 par la dérivation 38, la différence entre la consigne de température d'évaporateur et la température mesurée d'évaporateur, et du troisième soustracteur 39 par la dérivation 47, la différence entre la consigne de puissance du compresseur et la mesure de puissance du compresseur.

Le comparateur 5 détermine alors la consigne de vitesse de rotation du compresseur et émet cette valeur par la sortie 6. Le comparateur 5 choisit la consigne de vitesse de rotation parmi les vitesses reçues du moyen d'élaboration 2 de la vitesse de rotation limite du compresseur, du moyen d'élaboration 3 de la vitesse de rotation limite fonction de la température d'évaporateur, et du moyen d'élaboration 4 de la vitesse de rotation limite fonction de la pression, en fonction de la différence de températures d'évaporateur reçue du deuxième soustracteur 30, de la différence de puissances reçue du troisième soustracteur 39 et de la différence de pressions reçue du quatrième soustracteur 48.

Le comparateur 5 choisit pour cosigne de vitesse de rotation du compresseur la vitesse de rotation limite du compresseur fonction de la température de l'évaporateur si la différence de pressions est positive et si la différence de puissances est positive.

Lorsque la différence de pressions est négative et lorsque la différence de températures d'évaporateur est proche de zéro, le comparateur 5 choisit pour consigne de vitesse de rotation du compresseur la vitesse de rotation limite du compresseur fonction de la pression de réfrigérant.

Si la différence de puissances est négative et si la différence de températures d'évaporateur est proche de zéro, le comparateur 5 choisit pour consigne de vitesse de rotation du compresseur la vitesse de rotation limite du compresseur fonction de la puissance.

Dans le cas où la différence de puissances est négative, si la différence de pressions est négative et si la différence de températures d'évaporateur est proche de zéro, le comparateur 5 choisit pour consigne de vitesse de rotation du compresseur la valeur minimale parmi la vitesse de rotation limite du compresseur et la vitesse de rotation limite du compresseur fonction de la pression de réfrigérant.

Par contre, si la différence de puissances est négative , si la différence de pressions est négative et si la différence de températures d'évaporateur est positive, le comparateur 5 choisit pour consigne de vitesse de rotation du compresseur la valeur minimale parmi la vitesse de rotation limite du compresseur fonction de la température de l'évaporateur, la vitesse de rotation limite du compresseur fonction de la puissance et la vitesse de rotation limite du compresseur fonction de la pression de réfrigérant.

Si la différence de puissances est négative et si la différence de températures d'évaporateur est positive, le comparateur 5 choisit pour consigne de vitesse de rotation du compresseur la valeur minimale parmi la vitesse de rotation limite du compresseur fonction de la température de l'évaporateur et la vitesse de rotation limite du compresseur fonction de la puissance.

Enfin, si la différence de pressions est négative et si la différence de températures d'évaporateur est positive, le comparateur 5 choisit pour consigne de vitesse de rotation du compresseur la valeur minimale parmi la vitesse de rotation limite du compresseur fonction de la température de l'évaporateur et la vitesse de rotation limite du compresseur fonction de la pression de réfrigérant.

Le système de commande d'un système d'air climatisé permet d'estimer l'intérêt de la consommation électrique du compresseur au vu du gain en confort thermique. Les différents modes de réalisation permettent de réaliser des systèmes basés sur une élaboration plus ou moins poussée des différents paramètres physiques impliqués dans le fonctionnement d'un système d'air climatisé.

## Revendications

1. Système de commande d'un système d'air climatisé équipant un véhicule automobile comprenant un évaporateur et un compresseur entraîné par un moteur électrique à vitesse de rotation commandée, ledit système de commande comprenant
un moyen d'élaboration (2) d'une vitesse de rotation limite du compresseur,
un moyen d'élaboration (5) d'une consigne de vitesse de rotation du compresseur en fonction de la vitesse de rotation limite du compresseur, et
des moyens de commande de la vitesse de rotation du moteur électrique en fonction de la consigne de vitesse de rotation du compresseur, **caractérisé en ce que** ledit moyen d'élaboration (2) d'une vitesse de rotation limite du compresseur détermine ladite vitesse de rotation limite du compresseur en fonction d'une température extérieure et de la consigne de température de l'évaporateur.

2. Système de commande selon la revendication 1, comprenant un moyen d'élaboration (3) de la vitesse de rotation limite fonction de la température d'évaporateur et un moyen d'élaboration (4) de la vitesse de rotation limite fonction de la pression reliés par leur sortie au moyen d'élaboration (5) d'une consigne de vitesse de rotation du compresseur.

3. Système de commande selon la revendication 2, dans lequel le moyen d'élaboration (2) d'une vitesse de rotation limite du compresseur reçoit en entrée le débit d'air en sortie du système de climatisation, le moyen d'élaboration (2) d'une vitesse de rotation limite du compresseur comprenant une première cartographie de vitesses limites du compresseur en fonction de la température extérieure, de la consigne de température de l'évaporateur et du débit d'air en sortie du système de climatisation.

4. Système de commande selon la revendication 2, dans lequel le moyen d'élaboration (2) d'une vitesse de rotation limite du compresseur comprend une seconde cartographie (21) du coefficient de performance en fonction de la température extérieure, des moyens d'élaboration (13,15,17,18,24) de la a puissance électrique du compresseur en fonction de la température extérieure, de la consigne de température de l'évaporateur, du coefficient de performance et d'une valeur du débit d'air en sortie du système de climatisation reçue en entrée, et une troisième cartographie (27) de la vitesse de rotation limite du compresseur en fonction de la puissance électrique du compresseur et de la température extérieure.

5. Système de commande selon la revendication 2, dans lequel le moyen d'élaboration (2) d'une vitesse de rotation limite du compresseur comprend une régulation de type PI en fonction de la différence entre une consigne de puissance du compresseur et une mesure de puissance du compresseur, reçues en entrée.

6. Système de commande selon la revendication 5, dans lequel le moyen d'élaboration (3) de la vitesse de rotation limite fonction de la température d'évaporateur comprend une régulation de type PI en fonction de la différence entre une consigne de température d'évaporateur et une température mesurée d'évaporateur, reçues en entrée.

7. Système de commande selon l'une quelconque des revendications 5 ou 6, comprenant une quatrième cartographie (57) apte à émettre une valeur maximale de la pression de réfrigérant en fonction de la température extérieure, le moyen d'élaboration (4) de la vitesse de rotation limite fonction de la pression comprend une régulation de type PI en fonction de la différence entre valeur maximale de la pression de réfrigérant et la pression de réfrigérant mesurée.

8. Système de commande selon l'une quelconque des revendications 5 à 7, dans lequel le moyen d'élaboration (5) d'une consigne de vitesse de rotation du compresseur reçoit également en entrée la différence des signaux d'entrée du moyen d'élaboration (2) d'une vitesse de rotation limite du compresseur, du moyen d'élaboration (3) de la vitesse de rotation limite fonction de la température d'évaporateur et du moyen d'élaboration (4) de la vitesse de rotation limite fonction de la pression.

9. Procédé de commande d'un système d'air climatisé équipant un véhicule automobile comprenant un évaporateur et un compresseur entraîné par un moteur électrique dont la vitesse de rotation est commandée, dans lequel on élabore une consigne de vitesse de rotation du compresseur en fonction de la température extérieure et de la consigne de température de l'évaporateur, et on asservit le moteur électrique en fonction de la consigne de vitesse de rotation du compresseur.

10. Procédé de commande selon la revendication 9, dans lequel on choisit pour consigne de vitesse de rotation du compresseur la valeur minimale parmi une vitesse de rotation limite du compresseur, une vitesse de rotation limite du compresseur fonction de la température de l'évaporateur et une vitesse de rotation limite du compresseur fonction de la pression de réfrigérant.

11. Procédé de commande selon la revendication 10, dans lequel on élabore la vitesse de rotation limite du compresseur en fonction d'une cartographie de vitesses maximales du compresseur ayant pour entrées la température extérieure, la consigne de température de l'évaporateur et un débit d'air en sortie du système de climatisation.

12. Procédé de commande selon la revendication 10, dans lequel on élabore la puissance électrique du compresseur en fonction de la température extérieure, de la consigne de température de l'évaporateur, et du débit d'air en sortie du compresseur, et on élabore la vitesse de rotation limite du compresseur en fonction d'une comparaison de la puissance électrique du compresseur et de la température extérieure.

13. Procédé de commande selon la revendication 9, dans lequel on élabore une vitesse de rotation limite du compresseur par une régulation de type PI en fonction de la différence entre une consigne de puissance du compresseur et une mesure de puissance du compresseur, reçues en entrée,
on élabore une vitesse de rotation limite du compresseur fonction de la température de l'évaporateur par une régulation de type PI en fonction de la différence entre une consigne de température d'évaporateur et une température mesurée d'évaporateur, reçues en entrée,
on détermine une valeur maximale de pression de réfrigérant en fonction de la température extérieure, et
on élabore une vitesse de rotation limite du compresseur fonction de la pression de réfrigérant par une régulation de type PID en fonction de la différence entre une valeur maximale de pression de réfrigérant et une pression de réfrigérant mesurée.

14. Procédé de commande selon la revendication 13, dans laquelle on choisit la consigne de vitesse de rotation du compresseur parmi la vitesse de rotation limite du compresseur fonction de la température de l'évaporateur, la vitesse de rotation limite du compresseur fonction de la pression de réfrigérant, et la vitesse de rotation limite du compresseur fonction de la puissance en fonction de la différence entre la consigne de température d'évaporateur et la température mesurée d'évaporateur, de la différence entre la consigne de puissance du compresseur et la puissance mesurée du compresseur, et de la différence entre la valeur maximale de pression de réfrigérant et la pression de réfrigérant mesurée.

15. Procédé de commande selon la revendication 14, dans lequel on choisit pour consigne de vitesse de rotation du compresseur la vitesse de rotation limite du compresseur fonction de la température de l'évaporateur si la différence de pressions est positive et si la différence de puissances est positive.

16. Procédé de commande selon l'une quelconque des revendications 14 ou 15, dans lequel on choisit pour consigne de vitesse de rotation du compresseur la vitesse de rotation limite du compresseur fonction de la pression de réfrigérant si la différence de pressions est négative et si la différence de températures d'évaporateur est proche de zéro.

17. Procédé de commande selon l'une quelconque des revendications 14 à 16, dans lequel on choisit pour consigne de vitesse de rotation du compresseur la vitesse de rotation limite du compresseur fonction de la puissance si la différence de puissances est négative et si la différence de températures d'évaporateur est proche de zéro.

18. Procédé de commande selon l'une quelconque des revendications 14 à 17, dans lequel on choisit pour consigne de vitesse de rotation du compresseur la valeur minimale parmi la vitesse de rotation limite du compresseur et la vitesse de rotation limite du compresseur fonction de la pression de réfrigérant si la différence de puissances est négative, si la différence de pressions est négative et si la différence de températures d'évaporateur est proche de zéro.

19. Procédé de commande selon l'une quelconque des revendications 14 à 18, dans lequel on choisit pour consigne de vitesse de rotation du compresseur la valeur minimale parmi la vitesse de rotation limite du compresseur fonction de la température de l'évaporateur, la vitesse de rotation limite du compresseur et la vitesse de rotation limite du compresseur fonction de la pression de réfrigérant si la différence de puissances est négative, si la différence de pressions est négative et si la différence de températures d'évaporateur est positive.

20. Procédé de commande selon l'une quelconque des revendications 14 à 19, dans lequel on choisit pour consigne de vitesse de rotation du compresseur la valeur minimale parmi la vitesse de rotation limite du compresseur fonction de la température de l'évaporateur et la vitesse de rotation limite du compresseur si la différence de puissances est positive et si la différence de températures d'évaporateur est positive.

21. Procédé de commande selon l'une quelconque des revendications 14 à 20, dans lequel on choisit pour consigne de vitesse de rotation du compresseur la valeur minimale parmi la vitesse de rotation limite du compresseur fonction de la température de l'évaporateur et la vitesse de rotation limite du compresseur fonction de la pression de réfrigérant si la différence de pressions est négative et si la différence de températures d'évaporateur est positive.

**Patentansprüche**

1. Steuersystem eines Klimaanlagensystems, das ein Kraftfahrzeug ausstattet, das einen Verdampfer und einen Verdichter, der von einem Elektromotor mit gesteuerter Drehzahl angetrieben wird, aufweist, wobei das Steuersystem ein Mittel zum Bestimmen (2) einer Grenzdrehzahl des Verdichters, ein Mittel zum Bestimmen (5) eines Drehzahlsollwerts des Verdichters in Abhängigkeit von der Grenzdrehzahl des Verdichters, und Steuermittel der Drehzahl des Elektromotors in Abhängigkeit von dem Drehzahlsollwert des Verdichters aufweist, **dadurch gekennzeichnet, dass** das Mittel zur Bestimmen (2) einer Grenzdrehzahl des Verdichters die Grenzdrehzahl des Verdichters in Abhängigkeit von einer Außentemperatur und der Solltemperatur des Verdampfers bestimmt.

2. Steuersystem nach Anspruch 1, das ein Mittel zum Bestimmen (3) der Grenzdrehzahl in Abhängigkeit von der Verdampfertemperatur und ein Mittel zum Bestimmen (4) der Grenzdrehzahl in Abhängigkeit von dem Druck aufweist, die durch ihren Ausgang mit dem Mittel zum Bestimmen (5) eines Drehzahlsollwerts des Verdichters verbunden sind.

3. Steuersystem nach Anspruch 2, bei dem das Mittel zum Bestimmen (2) einer Grenzdrehzahl des Verdichters am Eingang den Luftdurchsatz am Ausgang des Klimaanlagensystems empfängt, wobei das Mittel zum Bestimmen (2) einer Grenzdrehzahl des Verdichters eine erste Kartographie von Grenzdrehzahlen des Verdichters in Abhängigkeit von der Außentemperatur, dem Temperatursollwert des Verdichters und dem Luftdurchsatz am Ausgang des Klimaanlagensystems aufweist.

4. Steuersystem nach Anspruch 2, bei dem das Mittel zum Bestimmen (2) einer Grenzdrehzahl des Verdichters eine zweite Kartographie (21) des Leistungskoeffizienten in Abhängigkeit von der Außentemperatur, Mittel zum Bestimmen (13, 15, 17, 18, 24) der elektrischen Leistung des Verdichters in Abhängigkeit von der Außentemperatur, dem Temperatursollwert des Verdampfers, dem Leistungskoeffizienten und einem Wert des Luftdurchsatzes am Ausgang des Klimaanlagensystems, der am Eingang empfangen wird, sowie eine dritte Kartographie (27) der Grenzdrehzahl des Verdichters in Abhängigkeit von der elektrischen Leistung des Verdichters und der Außentemperatur aufweist.

5. Steuersystem nach Anspruch 2, bei dem das Mittel zum Bestimmen (2) einer Grenzdrehzahl des Verdichters eine Regelung des Typs PI in Abhängigkeit von dem Unterschied zwischen einem Leistungssollwert des Verdichters und einer Leistungsmessung des Verdichters, die am Eingang empfangen werden, aufweist.

6. Steuersystem nach Anspruch 5, bei dem das Mittel zum Bestimmen (3) der Grenzdrehzahl, die von der Temperatur des Verdampfers abhängt, eine Regelung des Typs PI in Abhängigkeit von dem Unterschied zwischen einem Verdampfer-Temperatursollwert und einer gemessenen Verdampfertemperatur, die am Eingang empfangen werden, aufweist.

**7.** Steuersystem nach einem der Ansprüche 5 oder 6, das eine vierte Kartographie (57) aufweist, die einen Höchstwert des Kühlmitteldrucks in Abhängigkeit von der Außentemperatur ausgeben kann, wobei das Mittel zum Bestimmen (4) der Grenzdrehzahl in Abhängigkeit von dem Druck eine Regelung des Typs PI in Abhängigkeit von dem Unterschied zwischen dem Höchstwert des Kühlmitteldrucks und dem gemessenen Kühlmitteldruck aufweist.

**8.** Steuersystem nach einem der Ansprüche 5 bis 7, bei dem das Mittel zum Bestimmen (5) eines Drehzahlsollwerts des Verdichters auch am Eingang den Unterschied der Eingangssignale des Mittels zum Bestimmen (2) einer Grenzdrehzahl des Verdichters, des Mittels zum Bestimmen (3) der Grenzdrehzahl in Abhängigkeit von der Verdampfertemperatur und des Mittels zum Bestimmen (4) der Grenzdrehzahl in Abhängigkeit von dem Druck empfängt.

**9.** Steuerverfahren eines Klimaanlagensystems, das ein Kraftfahrzeug ausstattet, das einen Verdampfer und einen Verdichter, der von einem Elektromotor angetrieben wird, dessen Drehzahl gesteuert ist, aufweist, bei dem man einen Drehzahlsollwert des Verdichters in Abhängigkeit von der Außentemperatur und dem Temperatursollwert des Verdampfers bestimmt und den Elektromotor in Abhängigkeit von dem Drehzahlsollwert des Verdichters steuert.

**10.** Steuerverfahren nach Anspruch 9, bei dem man als Drehzahlsollwert des Verdichters den Mindestwert aus einer Grenzdrehzahl des Verdichters, einer Grenzdrehzahl des Verdichters in Abhängigkeit von der Temperatur des Verdampfers und einer Grenzdrehzahl des Verdichters in Abhängigkeit von dem Kühlmitteldruck auswählt.

**11.** Steuerverfahren nach Anspruch 10, bei dem man die Grenzdrehzahl des Verdichters in Abhängigkeit von einer Kartographie von Höchstdrehzahlen des Verdichters bestimmt, die als Eingänge die Außentemperatur, die Solltemperatur des Verdampfers und einen Luftdurchsatz am Ausgang des Klimaanlagensystems aufweist.

**12.** Steuerverfahren nach Anspruch 10, bei dem man die elektrische Leistung des Verdichters in Abhängigkeit von der Außentemperatur, dem Temperatursollwert des Verdampfers und dem Luftdurchsatz am Ausgang des Verdichters bestimmt, und man die Grenzdrehzahl des Verdichters in Abhängigkeit von einem Vergleich zwischen der elektrischen Leistung des Verdichters und der Außentemperatur bestimmt.

**13.** Steuerverfahren nach Anspruch 9, bei dem man eine Grenzdrehzahl des Verdichters durch eine Regelung des Typs PI in Abhängigkeit von dem Unterschied zwischen einem Leistungssollwert des Verdichters und einer Leistungsmessung des Verdichters, die am Eingang empfangen werden, bestimmt,
man eine Grenzdrehzahl des Verdichters in Abhängigkeit von der Temperatur des Verdampfers durch eine Regelung des Typs PI in Abhängigkeit von dem Unterschied zwischen einem Verdampfer-Temperatursollwert und einer gemessenen Verdampfertemperatur, die am Eingang empfangen werden, bestimmt,
man einen Kühlmitteldruckhöchstwert in Abhängigkeit von der Außentemperatur bestimmt, und
man eine Grenzdrehzahl des Verdichters in Abhängigkeit von dem Kühlmitteldruck durch eine Regelung des Typs PID in Abhängigkeit von dem Unterschied zwischen einem Kühlmitteldruckhöchstwert und einem gemessenen Kühlmitteldruck bestimmt.

**14.** Steuerverfahren nach Anspruch 13, bei dem man den Drehzahlsollwert des Verdichters aus der Grenzdrehzahl des Verdichters in Abhängigkeit von der Temperatur des Verdampfers, der Grenzdrehzahl des Verdichters in Abhängigkeit von dem Kühlmitteldruck und der Grenzdrehzahl des Verdichters in Abhängigkeit von der Leistung in Abhängigkeit von dem Unterschied zwischen dem Verdampfer-Temperatursollwert und der gemessenen Verdampfertemperatur, dem Unterschied zwischen dem Leistungssollwert des Verdichters und der gemessenen Leistung des Verdichters sowie dem Unterschied zwischen dem Kühlmitteldruckhöchstwert und dem gemessenen Kühlmitteldruck auswählt.

**15.** Steuerverfahren nach Anspruch 14, bei dem man als Drehzahlsollwert des Verdichters die Grenzdrehzahl des Verdichters in Abhängigkeit von der Temperatur des Verdampfers auswählt, wenn der Unterschied von Drücken positiv ist und wenn der Unterschied von Leistungen positiv ist.

**16.** Steuerverfahren nach einem der Ansprüche 14 oder 15, bei dem man als Drehzahlsollwert des Verdichters die Grenzdrehzahl des Verdichters in Abhängigkeit von dem Kühlmitteldruck auswählt, wenn der Unterschied von Drücken negativ ist, und wenn der Unterschied von Verdampfertemperaturen nahe null ist.

**17.** Steuerverfahren nach einem der Ansprüche 14 bis 16, bei dem man als Drehzahlsollwert des Verdichters die Grenzdrehzahl des Verdichters in Abhängigkeit von der Leistung auswählt, wenn der Leistungsunterschied negativ ist und wenn der Unterschied von Verdampfertemperaturen nahe null ist.

**18.** Steuerverfahren nach einem der Ansprüche 14 bis 17, bei dem man als Drehzahlsollwert des Verdichters den Mindestwert aus dem Drehzahlgrenzwert des Verdichters und dem Drehzahlgrenzwert des Verdichters in Abhängigkeit von dem Kühlmitteldruck auswählt, wenn der Unterschied von Leistungen negativ ist, wenn der Unterschied von Drücken negativ ist und wenn der Unterschied von Verdampfertemperaturen nahe null ist.

**19.** Steuerverfahren nach einem der Ansprüche 14 bis 18, bei dem man als Drehzahlsollwert des Verdichters den Mindestwert aus der Grenzdrehzahl des Verdichters in Abhängigkeit von der Temperatur des Verdampfers, der Grenzdrehzahl des Verdichters und der Grenzdrehzahl des Verdichters in Abhängigkeit von dem Kühlmitteldruck auswählt, wenn der Unterschied von Leistungen negativ ist, wenn der Unterschied von Drücken negativ ist und wenn der Unterschied von Verdampfertemperaturen positiv ist.

**20.** Steuerverfahren nach einem der Ansprüche 14 bis 19, bei dem man als Drehzahlsollwert des Verdichters den Mindestwert aus der Grenzdrehzahl des Verdichters in Abhängigkeit von der Temperatur des Verdampfers und der Grenzdrehzahl des Verdichters auswählt, wenn der Unterschied von Leistungen positiv ist, und wenn der Unterschied von Verdampfertemperaturen positiv ist.

**21.** Steuerverfahren nach einem der Ansprüche 14 bis 20, bei dem man als Drehzahlsollwert des Verdichters den Mindestwert aus der Grenzdrehzahl des Verdichters in Abhängigkeit von der Temperatur des Verdampfers und der Grenzdrehzahl des Verdichters in Abhängigkeit von dem Kühlmitteldruck auswählt, wenn der Unterschied von Drücken negativ ist und wenn der Unterschied von Verdampfertemperaturen positiv ist.

**Claims**

**1.** System for controlling an air conditioning system fitted to a motor vehicle comprising an evaporator and a compressor driven by an electric motor at a controlled rotation speed, said control system comprising
a means (2) for formulating a rotation speed limit of the compressor,
a means (5) for formulating a rotation speed setpoint of the compressor as a function of the rotation speed limit of the compressor, and
means for controlling the rotation speed of the electric motor as a function of the rotation speed setpoint of the compressor, **characterized in that** said means (2) for formulating a rotation speed limit of the compressor determines said rotation speed limit of the compressor as a function of an outside temperature and of the evaporator temperature setpoint.

**2.** Control system according to Claim 1, comprising a means (3) for formulating the rotation speed limit as a function of the evaporator temperature and a means (4) for formulating the rotation speed limit as a function of the pressure which means being connected via their output to the means (5) for formulating a rotation speed setpoint of the compressor.

**3.** Control system according to Claim 2, wherein the means (2) for formulating a rotation speed limit of the compressor receives as an input the air flow rate at the output of the air conditioning system, the means (2) for formulating a rotation speed limit of the compressor comprising a first mapping of speed limits of the compressor as a function of the outside temperature, of the evaporator temperature setpoint and of the air flow rate at the output of the air conditioning system.

**4.** Control system according to Claim 2, wherein the means (2) for formulating a rotation speed limit of the compressor comprises a second mapping (21) of the performance coefficient as a function of the outside temperature, means (13, 15, 17, 18, 24) for formulating the electric power of the compressor as a function of the outside temperature, of the evaporator temperature setpoint, of the performance coefficient and of a value of the air flow rate at the output of the air conditioning system received as an input, and a third mapping (27) of the rotation speed limit of the compressor as a function of the electric power of the compressor and of the outside temperature.

**5.** Control system according to Claim 2, wherein the means (2) for formulating a rotation speed limit of the compressor comprises a PI regulation as a function of the difference between a power setpoint of the compressor and a power measurement of the compressor, which items being received as an input.

**6.** Control system according to Claim 5, wherein the means (3) for formulating the rotation speed limit as a function of the evaporator temperature comprises a PI regulation as a function of the difference between an evaporator temperature setpoint and an evaporator measured temperature, which items being received as an input.

7. Control system according to either one of Claims 5 and 6, comprising a fourth mapping (57) capable of transmitting a maximum value of the coolant pressure as a function of the outside temperature, the means (4) for formulating the rotation speed limit as a function of the pressure comprises a PI regulator as a function of the difference between the maximum value of the coolant pressure and the measured coolant pressure.

8. Control system according to any one of Claims 5 to 7, wherein the means (5) for formulating a rotation speed setpoint of the compressor also receives as an input the difference between the input signals of the means (2) for formulating a rotation speed limit of the compressor, the means (3) for formulating the rotation speed limit as a function of the evaporator temperature and the means (4) for formulating the rotation speed limit as a function of the pressure.

9. Method for controlling an air conditioning system fitted to a motor vehicle comprising an evaporator and a compressor driven by an electric motor of which the rotation speed is controlled, in which a rotation speed setpoint of the compressor is formulated as a function of the outside temperature and of the evaporator temperature setpoint, and the electric motor is slaved as a function of the rotation speed setpoint of the compressor.

10. Control method according to Claim 9, wherein the minimum value amongst a rotation speed limit of the compressor, a rotation speed limit of the compressor as a function of the evaporator temperature and a rotation speed limit of the compressor as a function of the coolant pressure is chosen for the rotation speed setpoint of the compressor.

11. Control method according to Claim 10, wherein the rotation speed limit of the compressor as a function of a mapping of maximum speeds of the compressor is formulated having as inputs the outside temperature, the evaporator temperature setpoint and an air flow rate at the output of the air conditioning system.

12. Control method according to Claim 10, wherein the electric power of the compressor is formulated as a function of the outside temperature, of the evaporator temperature setpoint, and of the air flow rate at the output of the compressor, and the rotation speed limit of the compressor is formulated as a function of a comparison of the electric power of the compressor and of the outside temperature.

13. Control method according to Claim 9, wherein a rotation speed limit of the compressor is formulated by a PI regulator as a function of the difference between a power setpoint of the compressor and a power measurement of the compressor, which items being received as an input,
a rotation speed limit of the compressor is formulated as a function of the evaporator temperature by a PI regulator as a function of the difference between an evaporator temperature setpoint and an evaporator measured temperature, which items being received as an input,
a maximum coolant pressure value is determined as a function of the outside temperature, and
a rotation speed limit of the compressor is formulated as a function of the coolant pressure by a PID regulator as a function of the difference between a maximum coolant pressure value and a measured coolant pressure.

14. Control method according to Claim 13, wherein the rotation speed setpoint of the compressor is chosen amongst the rotation speed limit of the compressor as a function of the evaporator temperature, the rotation speed limit of the compressor as a function of the coolant pressure, and the rotation speed limit of the compressor as a function of the power as a function of the difference between the evaporator temperature setpoint and the evaporator measured temperature, of the difference between the power setpoint of the compressor and the measured power of the compressor, and of the difference between the maximum coolant pressure value and the measured coolant pressure.

15. Control method according to Claim 14, wherein the rotation speed limit of the compressor as a function of the evaporator temperature is chosen for the rotation speed setpoint of the compressor if the pressure difference is positive and if the power difference is positive.

16. Control method according to either one of Claims 14 and 15, wherein the rotation speed limit of the compressor as a function of the coolant pressure is chosen for the rotation speed setpoint of the compressor if the pressure difference is negative and if the evaporator temperature difference is close to zero.

17. Control method according to any one of Claims 14 to 16, wherein the rotation speed limit of the compressor as a function of the power is chosen for the rotation speed setpoint of the compressor if the power difference is negative and if the evaporator temperature difference is close to zero.

**18.** Control method according to any one of Claims 14 to 17, wherein the minimum value amongst the rotation speed limit of the compressor and the rotation speed limit of the compressor as a function of the coolant pressure is chosen for the rotation speed setpoint of the compressor if the power difference is negative, if the pressure difference is negative and if the evaporator temperature difference is close to zero.

**19.** Control method according to any one of Claims 14 to 18, wherein the minimum value amongst the rotation speed limit of the compressor as a function of the evaporator temperature, the rotation speed limit of the compressor and the rotation speed limit of the compressor as a function of the coolant pressure is chosen for the rotation speed setpoint of the compressor if the power difference is negative, if the pressure difference is negative and if the evaporator temperature difference is positive.

**20.** Control method according to any one of Claims 14 to 19, wherein the minimum value amongst the rotation speed limit of the compressor as a function of the evaporator temperature and the rotation speed limit of the compressor is chosen for the rotation speed setpoint of the compressor if the power difference is positive and if the evaporator temperature difference is positive.

**21.** Control method according to any one of Claims 14 to 20, wherein the minimum value amongst the rotation speed limit of the compressor as a function of the evaporator temperature and the rotation speed limit of the compressor as a function of the coolant pressure is chosen for the rotation speed setpoint of the compressor if the pressure difference is negative and if the evaporator temperature difference is positive.

## FIG.1

## FIG.2

## FIG.3

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008088241 A
- FR 2840261

- US 2008093132 A1